# EUROPEAN PATENT SPECIFICATION

(11) **EP 3 171 062 B1**
(45) Date of publication and mention of the grant of the patent: **17.04.2019**
(21) Application number: 16193253.8
(22) Date of filing: 11.10.2016
(51) Int. Cl.: F16K 27/00, F16K 31/06

(54) **VALVE BLOCK, FLUID MACHINE, AND RENEWABLE-ENERGY POWER GENERATING APPARATUS**
VENTILBLOCK, FLUIDMASCHINE UND VORRICHTUNG ZUR ERZEUGUNG VON ERNEUERBARER ENERGIE
BLOC DE VANNE, MACHINE À FLUIDE ET APPAREIL DE GÉNÉRATION D'ÉNERGIE À ÉNERGIE RENOUVELABLE

(30) Priority: 17.11.2015 JP 2015224717
(43) Date of publication of application: 24.05.2017
(73) Proprietor: Mitsubishi Heavy Industries, Ltd., Tokyo 108-8215 (JP)
(72) Inventor: Tsutsumi, Kazuhisa, Tokyo, 108-8215 (JP); Kawabata, Shinji, Tokyo, 108-8215 (JP); Shimizu, Masayuki, Tokyo, 108-8215 (JP); Watanabe, Daigo, Tokyo, 108-8215 (JP); McIntyre, Fergus, Loanhead, Midlothian, Lothian EH20 9TB (GB); Stein, Uwe, Loanhead, Midlothian, Lothian EH20 9TB (GB); Stevenson, John, Loanhead, Midlothian, Lothian EH20 9TB (GB)
(74) Representative: Henkel, Breuer & Partner

(56) References cited:
- DE-A1- 19 644 963
- DE-A1- 19 936 711
- JP-A- 2005 132 347

## Description

### TECHNICAL FIELD

The present disclosure relates to a valve block, a fluid machine, and a renewable-energy power generating apparatus.

### BACKGROUND ART

A fluid machine such as a hydraulic machine may include a valve block that is removable from a casing.

For instance, JP 2014-163377A discloses a hydraulic machine which includes a valve block including a valve-block body portion with a housing chamber for housing a valve, and a valve-block connecting portion receiving the valve-block body portion and fixed to a cylinder block having a cylinder formed thereon. In the valve block, the valve-block body portion has a cylindrical portion provided coaxially with the cylinder, and a screw thread (male thread) is formed partially on an outer peripheral surface of the cylindrical portion. A screw hole to be mated with the screw thread is formed on the valve-block connecting portion. With the screw thread and the screw hole screwed together, the valve-block body portion and the valve-block connecting portion are joined, the valve-block body portion being fixed to the valve block, and the valve-block body portion being fixed to the cylinder block via the valve-block connecting portion.

JP 2005-132347 A discloses a check valve including a valve casing accommodating the valve, and a valve-block body receiving the valve casing inside an assembly hole. The valve-block body has an integral fastening portion fastening the valve casing to the valve-block body by engaging a flange part formed on the valve casing so as to protrude in the radial direction of the hole. In more detail, the valve casing is fastened to the valve-block body by swaging an open end portion of the hole of the valve-block body such that the fastening portion is deformed and fastens the valve casing inside the hole to the valve-block body.

DE 19936711 A1 discloses a valve-block body for receiving a valve casing accommodating an electromagnetic valve. The valve casing is fastened to the valve-block body by swaging an open end portion of the valve-block body such that the fastening portion is deformed and fastens the valve casing to the valve block body.

### SUMMARY

Meanwhile, in the valve block disclosed in JP 2014-163377A, the valve-block body portion (casing) has a cantilever structure where the valve-block body portion is joined by screwing to the valve-block connecting portion (valve-block body) only at a part of the outer peripheral surface of the cylindrical portion. In other words, a section between the joined portion and a working chamber (the cylinder) is not joined to any other member, thus being a free end supported at the boundary to the joined portion.

The present inventors conducted researches and found that a valve block with such a cantilever structure may develop fretting at the free end section. Specifically, in a valve block having the above described cantilever structure, a free end section disposed closer to a working chamber within a casing is exposed to a bending moment generated due to a pressure of the working chamber, and thus may deform. If the pressure of the working chamber changes periodically, the bending moment changes with the pressure change, and the bending deformation repeatedly occurs at the free end section, which may eventually lead to occurrence of fretting between the free end section of the valve casing and the valve-block body.

However, JP 2014-163377A does not explicitly disclose the risk of occurrence of fretting between the valve-block body and the valve casing, nor a countermeasure thereto.

In view of the above issue, an object of at least one embodiment of the present invention is to provide a valve block whereby it is possible to reduce fretting.

A valve block according to the present invention includes the features of claim 1. The valve block according to the present invention comprises: a valve configured to be capable of opening and closing in accordance with a periodic change of a pressure of a working chamber of a fluid machine; a valve casing accommodating the valve; a valve-block body having a hole for receiving the valve casing; and a fastening part provided as a separate member from the valve casing and configured to fasten the valve casing received in the hole to the valve-block body. The valve casing includes a flange portion disposed so as to protrude outward in a radial direction of the hole. The valve-block body includes a contact surface in contact with a surface closer to the working chamber of both end surfaces of the flange portion. The fastening part is configured to fasten the valve casing to the valve-block body by applying an axial force along an axial direction of the hole to the contact surface via the flange portion. The contact surface of the valve-block body is disposed closer to the working chamber in the axial direction than an outer surface of the valve-block body at an outer circumferential edge of the hole.

With the above configuration, the contact surface of the valve-block body on which a fastening force is to be applied by the fastening part is disposed closer to the working chamber in the axial direction of the hole (hereinafter, also referred to as simply "axial direction") than the outer surface at the outer circumferential edge around the hole (for receiving the valve casing) formed on the valve-block body. Specifically, the length, in the axial direction of the hole, of a section of the valve casing closer to the working chamber than the contact surface of the valve-block body (i.e., the free end section of the cantilever structure supported at the position of the contact surface) is shorter than the distance between the outer surface of the valve-block body and a surface closer to the working chamber of the both end surfaces of the valve casing. Accordingly, with the above configuration, it is possible to reduce fretting between the valve-block body and the valve casing by reducing the length of the free end section of the cantilever structure.

Furthermore, with the above configuration, the fastening part is provided separately from the valve casing, and thereby it is possible to design the fastening part independently from the valve casing to have a structure that can ensure a sufficient initial fastening force. Furthermore, the valve casing is a member independent from the fastening part, and thus it is not necessary to screw the valve casing itself into the hole of the valve-block body during fastening, and it is sufficient if the valve casing is simply inserted into the hole of the valve-block body. Accordingly, it is possible to reduce sliding between the valve casing and the valve-block body, and to reduce a risk of damage to a member (e.g. a seal member) disposed between the valve casing and the valve-block body.

In some embodiments, in the above configuration, a ratio (D1/D2) of D1 to D2 is at least 0.3, where D1 is a distance between the contact surface and the outer surface of the valve-block body in the axial direction and D2 is a distance between the outer surface of the valve-block body and a surface closer to the working chamber of both end surfaces of the valve casing in the axial direction.

With the above configuration, a ratio of the distance D1 in the axial direction between the outer surface of the valve-block body and the contact surface to the distance D2 in the axial direction between the outer surface of the valve-block body and the surface closer to the working chamber of the both end surfaces of the valve casing is at least 0.3. Accordingly, the length of the free end section of the cantilever structure of the valve casing is reduced, and thereby it is possible to reduce fretting between the valve-block body and the valve casing more reliably.

Further, the fastening part comprises a nut member having a male thread to be mated with a female thread formed on the hole of the valve-block body.

With the above configuration, the nut member is screwed into the hole of the valve-block body to fasten the valve casing to the valve-block body, and thus it is not necessary to screw the valve casing into the valve-block body during fastening, unlike the case where a male thread is formed on the outer peripheral surface of the valve casing itself, and thereby it is possible to reduce sliding between the valve casing and the valve-block body portion. Accordingly, it is possible to reduce a risk of damage to a member (e.g. a seal member) disposed between the valve casing and the valve-block body.

In some embodiments, in the above configuration, the fastening part further comprises a plurality of first bolts to be screwed into respective first screw holes disposed along a circumferential direction of the nut member and formed through the nut member. The plurality of first bolts is configured to transmit a fastening force acting between the valve-block body and the nut member to the flange portion as the axial force.

With the above configuration, the plurality of first bolts having a smaller diameter than the nut member is used, and thus it is possible to apply a relatively large axial force to the contact surface with a relatively smaller fastening torque. Accordingly, by fastening the plurality of first bolts with a relatively small fastening torque, it is possible to suppress loosening of the fastening part for fastening the valve casing and the valve-block body even in a case where the pressure of the working chamber becomes relatively high.

In some embodiments, in the above configuration including the first bolts, the valve block further comprises a first spacer which is disposed between tips of the respective first bolts and the flange portion, and which comprises a material different from that of the first bolts and the flange portion.

Abrasion due to fretting is likely to develop between members made from the same material. In this regard, with the above configuration, the first spacer is made from a different material from the first bolts and the flange portion, and provided between the tips of the first bolts and the flange portion, and thereby it is possible to reduce fretting abrasion between the tips of the first bolts and the flange portion (valve casing).

In some embodiments, in any one of the above configurations, an initial fastening force of the fastening part is set so that the surface of the flange portion does not separate from the contact surface of the valve-block body due to pressure change of the working chamber during operation of the fluid machine.

With the above configuration, the fastening part is fastened with a sufficient initial fastening force, and thereby it is possible to suppress separation of the end surface closer to the working chamber of the flange portion from the outer surface of the valve-block body, even during operation of the fluid machine. Accordingly, it is possible to reduce fretting between the valve-block body and the valve casing while maintaining sufficient durability against pressure change of the working chamber in the valve block.

In some embodiments, in any one of the above configurations, the valve comprises: a rod having a first end portion and a second end portion; a valve-body unit joined to the first end portion of the rod and having at least a valve body capable of being in contact with a valve seat formed on the valve casing; an armature joined to the second end portion of the rod; a biasing member configured to bias the armature in a biasing direction; and an electromagnet configured to attract the armature to drive the armature in a direction opposite to the biasing direction when supplied with electric power. The valve casing comprises: an inner channel for permitting the working chamber and an external piping to be in communication when the valve is open; a rod insertion hole through which the second end portion of the rod is capable of passing; and an electromagnet housing space for housing the electromagnet.

With the above configuration, the valve block includes the valve casing receiving the solenoid valve that can be controlled to open and close by controlling supply of electric power to the electromagnet, and the length of the free end section of the cantilever structure of the valve block is reduced, and thereby it is possible to reduce fretting between the valve-block body and the valve casing.

A fluid machine according to at least one embodiment of the present invention comprises: a cylinder; a piston configured to be capable of reciprocating inside the cylinder; and the valve block according to any one of the above. The working chamber is defined by the cylinder and the piston, and the valve is configured to be capable of switching inflow of a fluid to the working chamber or outflow of a fluid from the working chamber.

With the above configuration, the contact surface of the valve-block body on which a fastening force is to be applied by the fastening part is disposed closer to the working chamber in the axial direction of the hole than the outer surface at the outer circumferential edge around the hole (for receiving the valve casing) formed on the valve-block body. Specifically, the length, in the axial direction of the hole, of a section of the valve casing closer to the working chamber than the contact surface of the valve-block body (i.e., the free end section of the cantilever structure supported at the position of the contact surface) is shorter than the distance between the outer surface of the valve-block body and a surface closer to the working chamber of the both end surfaces. Accordingly, with the above configuration, it is possible to reduce fretting between the valve-block body and the valve casing by reducing the length of the free end section of the cantilever structure.

A renewable energy power generating apparatus according to at least one embodiment of the present invention comprises: a rotor configured to receive renewable energy to rotate; a hydraulic pump configured to be driven by the rotor to pressurize working oil; a hydraulic motor configured to be driven by the working oil pressurized by the hydraulic pump; a high-pressure line connecting an outlet of the hydraulic pump and an inlet of the hydraulic motor; a low-pressure line connecting an outlet of the hydraulic motor and an inlet of the hydraulic pump; and a generator configured to be driven by the hydraulic motor. At least one of the hydraulic pump or the hydraulic motor is the fluid machine according to the above configuration, and the valve is configured to be capable of switching a communication state between the working chamber and the high-pressure line or the low-pressure line.

With the above configuration, the contact surface of the valve-block body on which a fastening force is to be applied by the fastening part is disposed closer to the working chamber in the axial direction of the hole than the outer surface of the valve-block body at the outer circumferential edge around the hole (for receiving the valve casing) formed on the valve-block body. Specifically, the length, in the axial direction of the hole, of a section of the valve casing closer to the working chamber than the contact surface of the valve-block body (i.e., the free end section of the cantilever structure supported at the position of the contact surface) is shorter than the distance between the outer surface of the valve-block body and the surface closer to the working chamber of the both end surfaces. Accordingly, with the above configuration, it is possible to reduce fretting between the valve-block body and the valve casing by reducing the length of the free end section of the cantilever structure.

According to at least one embodiment of the present invention, provided is a valve block whereby it is possible to reduce fretting.

### BRIEF DESCRIPTION OF DRAWINGS

FIG. 1 is a schematic diagram of a wind turbine power generating apparatus according to an embodiment.
FIG. 2 is a schematic configuration diagram of a fluid machine (hydraulic motor) according to an embodiment.
FIG. 3 is a schematic cross-sectional view of a configuration of a valve block according to an embodiment.
FIG. 4 is a schematic cross-sectional view of a configuration of a part of a valve block according to an embodiment.
FIG. 5 is a schematic cross-sectional view of a configuration of a part of a valve block according to an embodiment.
FIG. 6 is a perspective view of a fastening part of the valve block depicted in FIG. 5.
FIG. 7 is a perspective view of a valve block according to an example.
FIG. 8 is a schematic cross-sectional view of a configuration of the valve block depicted in FIG. 7.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

In the following description, a valve block included in a hydraulic machine (a hydraulic pump or a hydraulic motor) constituting a drive train of a wind turbine power generating apparatus will be described as an example of a valve block according to an embodiment of the present invention. Nevertheless, the valve block according to an embodiment of the present invention can be also applied to a fluid machine other than a hydraulic machine such as a hydraulic pump and a hydraulic motor, and to a fluid machine that is used for a usage other than a wind turbine power generating apparatus. For instance, a fluid machine including a valve bock according to an embodiment of the present invention may be applied to a renewable-energy power generating apparatus other than a wind turbine power generating apparatus, such as a tidal current power generating apparatus, an ocean current power generating apparatus, and a river current power generating apparatus, for instance, or to another type of apparatus such as a construction machine, and the usage of the fluid machine is not limited particularly.

First, an overall configuration of a wind turbine power generating apparatus will be described, which includes a hydraulic motor (fluid machine) including a valve block according to an embodiment.

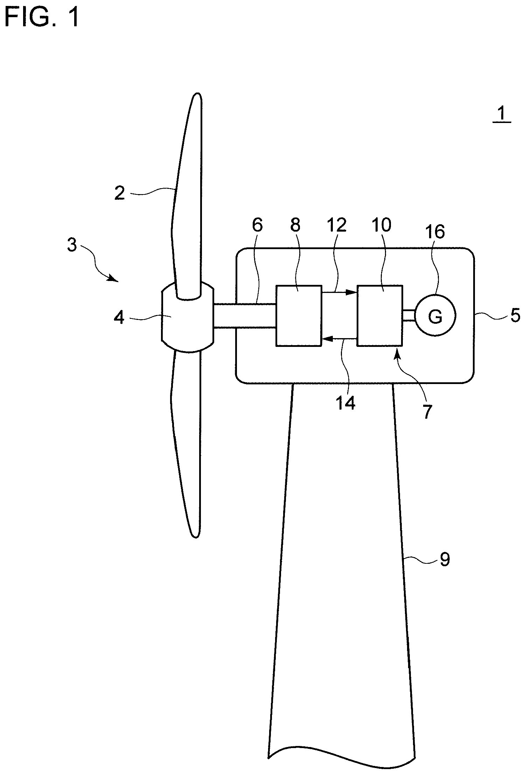

FIG. 1 is a schematic diagram of a wind turbine power generating apparatus according to an embodiment. As depicted in the drawing, a wind turbine power generating apparatus 1 includes a rotor 3 including at least one blade 2 and a hub 4.

In an embodiment, a hydraulic pump 8 is coupled to the rotor 3 via a rotor shaft 6. A hydraulic motor 10 is connected to the hydraulic pump 8 via a high-pressure line 12 and a low-pressure line 14. Specifically, an outlet of the hydraulic pump 8 is connected to an inlet of the hydraulic motor 10 via the high-pressure line 12, and an inlet of the hydraulic pump 8 is connected to an outlet of the hydraulic motor 10 via the low-pressure line 14.

In the wind turbine power generating apparatus 1 depicted in FIG. 1, the rotor 3 receives wind energy, which is a renewable energy, to rotate together with the rotor shaft 6. The hydraulic pump 8 is driven by the rotor 3 via the rotor shaft 6 to pressurize working oil, thereby producing high-pressure working oil (pressurized oil). The pressurized oil produced by the hydraulic pump 8 is supplied to the hydraulic motor 10 via the high-pressure line 12, and drives the hydraulic motor 10. The low-pressure working oil having performed work in the hydraulic motor 10 is returned again to the hydraulic pump 8 via the low-pressure line 14 disposed between the outlet of the hydraulic motor 10 and the inlet of the hydraulic pump 8.

A generator 16 is connected to the hydraulic motor 10 and is configured to be driven by the hydraulic motor 10. In an embodiment, the generator 16 is a synchronous generator connected to a utility grid and driven by the hydraulic motor 10.

Specifically, rotational energy of the rotor 3 is inputted into the generator 16 via the hydraulic transmission 7 including the hydraulic pump 8 and the hydraulic motor 10, and electric power is generated by the generator 16.

At least a part of the rotor shaft 6 is covered by a nacelle 5 disposed on a tower 9. In an embodiment, the hydraulic pump 8, the hydraulic motor 10, and the generator 16 are disposed inside the nacelle 5.

At least one of the hydraulic pump 8 or the hydraulic motor 10 is a fluid machine described below. In the following description, the hydraulic motor 10 will be described as an example of a fluid machine according to an embodiment.

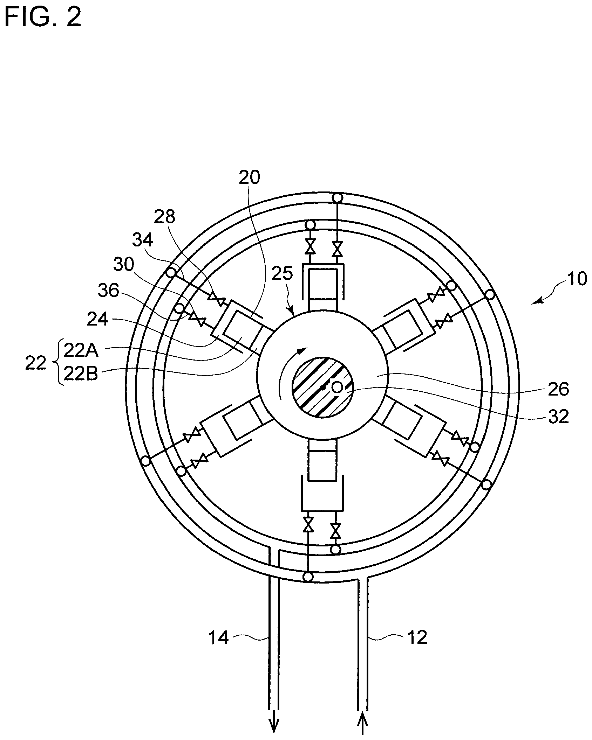

FIG. 2 is a schematic configuration diagram of a fluid machine (hydraulic motor 10) according to an embodiment. As depicted in the drawing, the hydraulic motor 10 includes a rotational shaft 32, a cylinder 20, a piston 22 defining a working chamber 24 together with the cylinder 20, a high-pressure valve 28 and a low-pressure valve 30 provided for the working chamber, and a conversion mechanism 25.

The conversion mechanism 25 is for converting motion between rotational motion of the rotational shaft 32 and reciprocal motion of the piston 22, and includes a cam 26 that has a cam curved surface to contact the piston 22.

The piston 22 preferably includes a piston body part 22A which slides inside the cylinder 20, and a piston roller or a piston shoe which is attached to the piston body part 22A and which contacts the cam curved surface of the cam 26, for the sake of smooth conversion of reciprocal motion of the piston 22 into rotational motion of the rotational shaft 32. In the example illustrated in FIG. 2, the piston 22 includes a piston body part 22A and a piston shoe 22B.

In the hydraulic motor 10 depicted in FIG. 2, the cam 26 is an eccentric cam disposed eccentrically from the axial center O of the rotational shaft (crank shaft) 32 of the hydraulic motor 10. While the cam 26 and the rotational shaft 32 to which the cam 26 is mounted perform one revolution, the piston 22 performs a set of upward and downward movement.

In another embodiment, the cam 26 is an annular-shaped multi-lobed cam (ring cam) having a plurality of lobes. In this case, while the cam 26 and the rotational shaft 32 to which the cam 26 is mounted perform one revolution, the piston 22 performs as many sets of upward and downward movement as the number of lobes.

The high-pressure valve 28 is disposed in a high-pressure communication line 34 between the working chamber 24 and the high-pressure line 12 disposed outside the working chamber 24, and configured to be capable of switching the communication state between the working chamber 24 and the high-pressure line 12. The low-pressure valve 30 is disposed in a low-pressure communication line 36 between the working chamber 24 and the low-pressure line 14 disposed outside the working chamber 24, and configured to be capable of switching the communication state between the working chamber 24 and the low-pressure line 14.

A fluid machine (hydraulic motor 10) further includes a valve block described below, and at least one of the high-pressure valve 28 or the low-pressure valve 30 is a valve according to the present invention and is housed in a valve casing that constitutes a valve block.

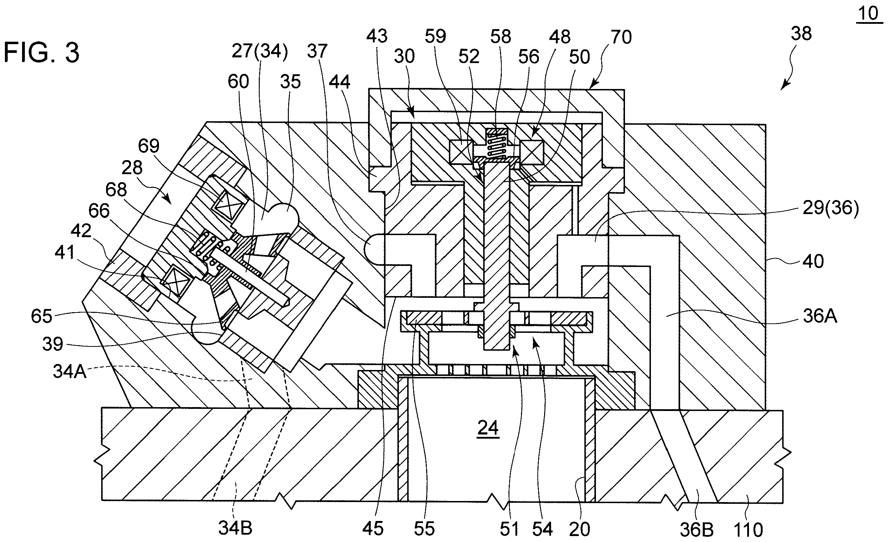

FIG. 3 is a schematic cross-sectional view of a configuration of a valve block of a fluid machine (hydraulic motor 10) according to an embodiment. As depicted in the drawing, the valve block 38 includes a valve-block body 40, a high-pressure valve 28 and a low-pressure valve 30, valve casings 42, 44 housing the high-pressure valve 28 and the low-pressure valve 30 respectively, and a fastening part 70 for fastening the valve casings 42, 44 and the valve-block body 40. FIG. 3 is a view where the high-pressure valve 28 is closed and the low-pressure valve 30 is open.

The valve-block body 40 has holes 41, 43 formed thereon to receive the valve casings 42, 44, and the fastening part 70 is configured to fasten the valve casings 42, 44 housed in the holes 41, 43 to the valve-block body. The fastening part 70 will be described below.

The valve-block body 40 is connected to a cylinder block 110 including a cylinder 20 formed thereon, with a non-depicted bolt, for instance. Accordingly, the valve block 38 including the valve-block body 40, the valve casings 42, 44, etc. is fixed to the cylinder block 110.

At least one of the high-pressure valve 28 or the low-pressure valve 30 is configured to be capable of opening and closing in accordance with the periodic change of the pressure of the working chamber 24 of the fluid machine (hydraulic motor 10).

More specifically, the high-pressure valve 28 depicted in FIG. 3 is a solenoid valve including a rod 60, a valve-body unit 64 and an armature 66 joined to the rod 60, a spring (biasing member) 68 for biasing the armature 66, and an electromagnet 69 for driving the armature 66. The valve-body unit 64 includes a valve body 65 disposed on the opposite side of a valve seat 39 formed on the valve casing 42 from the working chamber 24, and capable of being in contact with the valve seat 39. The armature 66 is configured to be biased in a biasing direction by the spring 68. The electromagnet 69 is configured to attract the armature 66 to drive the armature 66 in a direction opposite to the biasing direction, when supplied with electric power.

Furthermore, the valve casing 42 housing the high-pressure valve 28 includes a high-pressure inner channel 27 (inner channel) constituting the above described high-pressure communication line 34 formed thereon.

The high-pressure communication line 34 includes the above described high-pressure inner channel 27, and a valve-block high-pressure channel 34A and a cylinder-block high-pressure channel 34B connected to each other. The high-pressure inner channel 27 extends along the circumferential direction of the valve casing 42 in the valve-block body 40, and is connected to the valve-block high-pressure channel 34A via a high-pressure annular channel 35 formed so as to surround the valve casing 42. The high-pressure communication line 34 including the high-pressure inner channel 27 is disposed so that the working chamber 24 and the high-pressure line 12 (external piping) are in communication with each other when the high-pressure valve 28 is open.

The high-pressure valve 28 is a poppet-type solenoid valve of normally-closed type, configured to be capable of switching the communication state between the working chamber 24 and the high-pressure line 12 (see FIG. 2) by movement of the valve-body unit 64 due to an electromagnetic force of the electromagnet 69 or a biasing force of the spring 68.

Furthermore, the low-pressure valve 30 depicted in FIG. 3 is a solenoid valve including a rod 50, a valve-body unit 54 and an armature 56 joined to the rod 50, a spring (biasing member) 58 for biasing the armature 56, and an electromagnet 59 for driving the armature 56. The valve-body unit 54 includes a valve body 55 joined to the first end portion 51 of the rod 50, disposed on the same side of the valve seat 45 formed on the valve casing 44 as the working chamber 24, and capable of being in contact with the valve seat 45. The armature 56 is joined to the second end portion 52 of the rod 50, and configured to be biased in a biasing direction by the spring 58. The electromagnet 59 is configured to attract the armature 56 to drive the armature 56 in a direction opposite to the biasing direction, when supplied with electric power.

Furthermore, the valve casing 44 housing the low-pressure valve 30 includes a low-pressure inner channel (inner channel) 29 constituting the above described low-pressure communication line 36, a rod insertion hole 46 through which the second end portion 52 of the rod 50 can pass, and an electromagnet housing space 48 for housing the electromagnet 59.

The low-pressure communication line 36 includes the above described low-pressure inner channel 29, and a valve-block low-pressure channel 36A and a cylinder-block low-pressure channel 36B connected to each other. The low-pressure inner channel 29 extends along the circumferential direction of the valve casing 44 in the valve-block body 40, and is connected to the valve-block low-pressure channel 36A via a low-pressure annular channel 37 formed so as to surround the valve casing 44. The low-pressure communication line 36 including the low-pressure inner channel 29 is disposed so that the working chamber 24 and the low-pressure line 14 (external piping) communicate with each other when the low-pressure valve 30 is open.

The low-pressure valve 30 is a poppet-type solenoid valve of normally-open type, configured to be capable of switching the communication state between the working chamber 24 and the low-pressure line 14 (see FIG. 2) by movement of the armature 56 and the valve-body unit 54 due to an electromagnetic force of the electromagnet 59 or a biasing force of the spring 58.

In some embodiments, the high-pressure valve 28 and the low-pressure valve 30 are controlled to open and close by control signals from a non-depicted controller.

For instance, when the high-pressure valve 28 is not excited by a control signal from the controller, the armature 56 and the valve-body unit 64 are biased toward the valve seat 39 by the spring 68, and retained in a valve-closed position (position depicted in FIG. 3) where the working chamber 24 and the high-pressure line 12 are not in communication. When the high-pressure valve 28 is excited by a control signal from the controller, the armature 66 and the valve-body unit 64 move to a valve-open position where the working chamber 24 and the high-pressure line 12 are in communication with each other by the electromagnetic force, against the biasing force of the spring 68.

Further, for instance, when the low-pressure valve 30 is not excited by a control signal from the controller, the armature 56 and the valve-body unit 54 are biased in a direction away from the valve seat 45 by the spring 58, and retained in a valve-open position (position depicted in FIG. 3) where the working chamber 24 and the low-pressure line 14 are in communication. When the low-pressure valve 30 is excited by a control signal from the controller, the electromagnetic force of the electromagnet 59 attracts the armature 56 and the valve-body unit 54 moves toward the valve seat 45 by the electromagnetic force against the biasing force of the spring 58, to a valve-closed position where the working chamber 24 and the high-pressure line 12 are not in communication with each other.

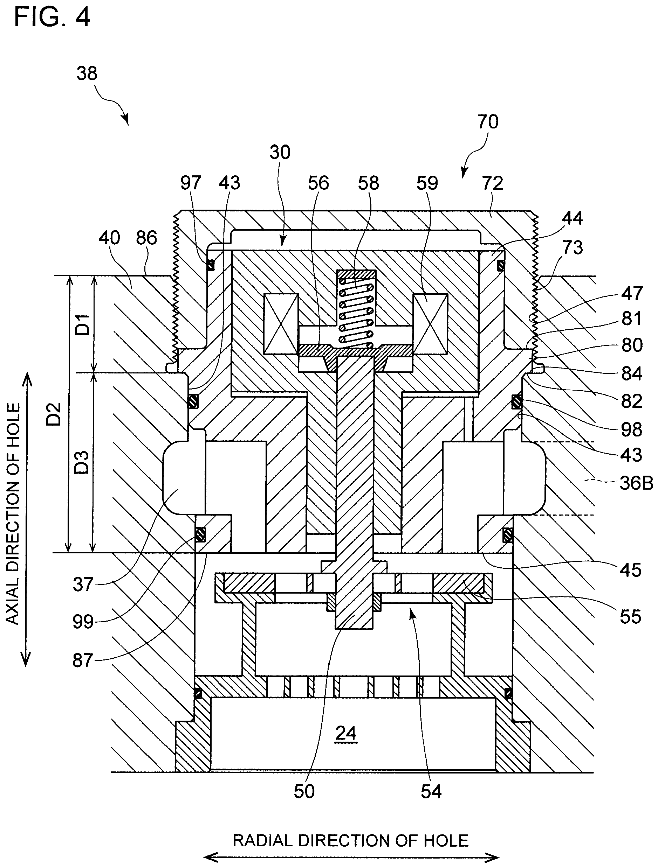

Next, with reference to FIGs. 4 to 8, a part of the valve block 38 will now be described. While the following description describes the valve block 38 including the valve casing 44 housing the low-pressure valve 30, the present invention is not limited to this and also can be applied to the valve block including the valve casing 42 housing the high-pressure valve 28.

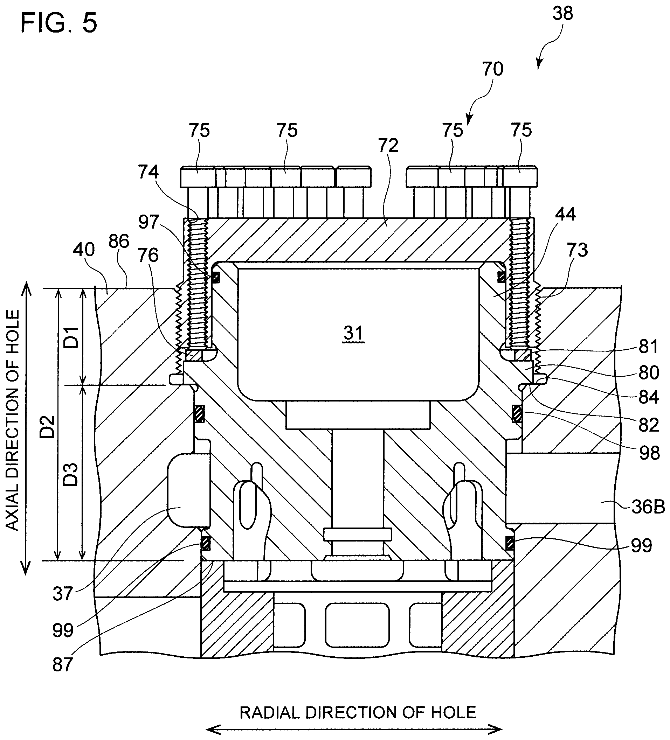

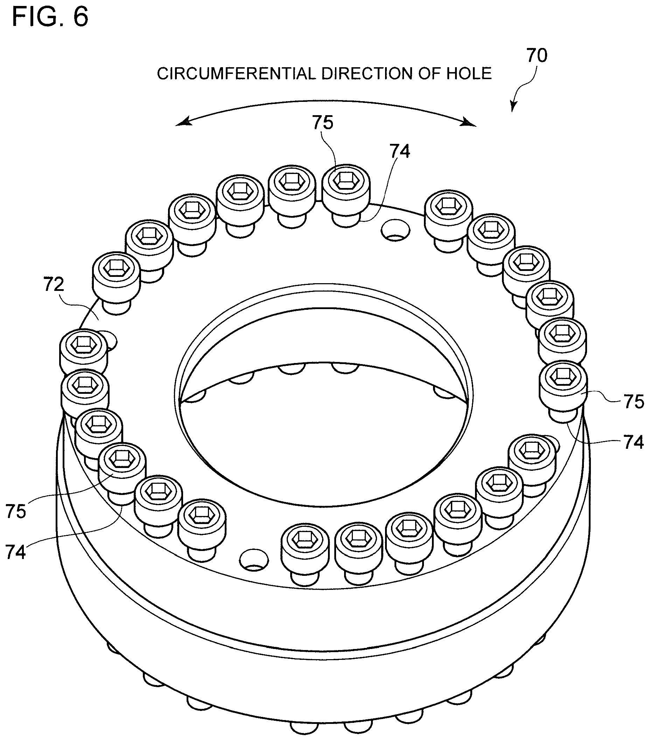

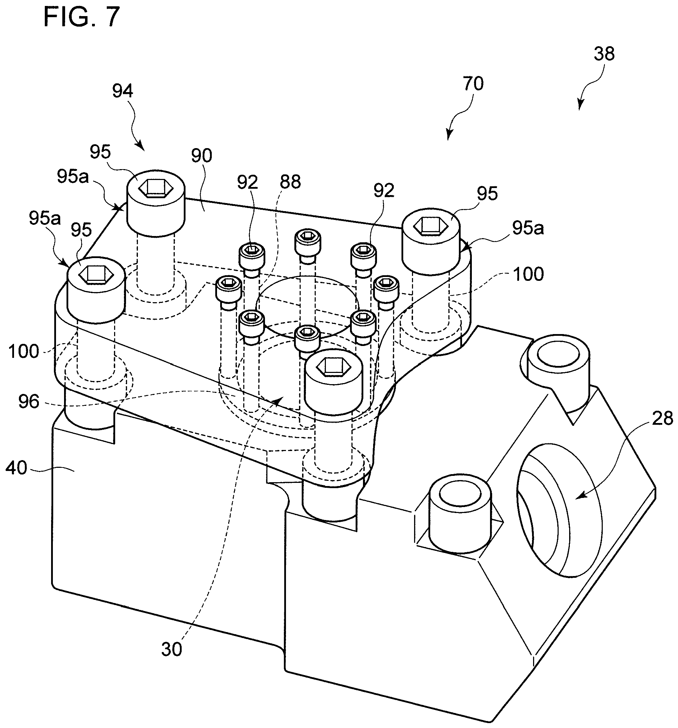

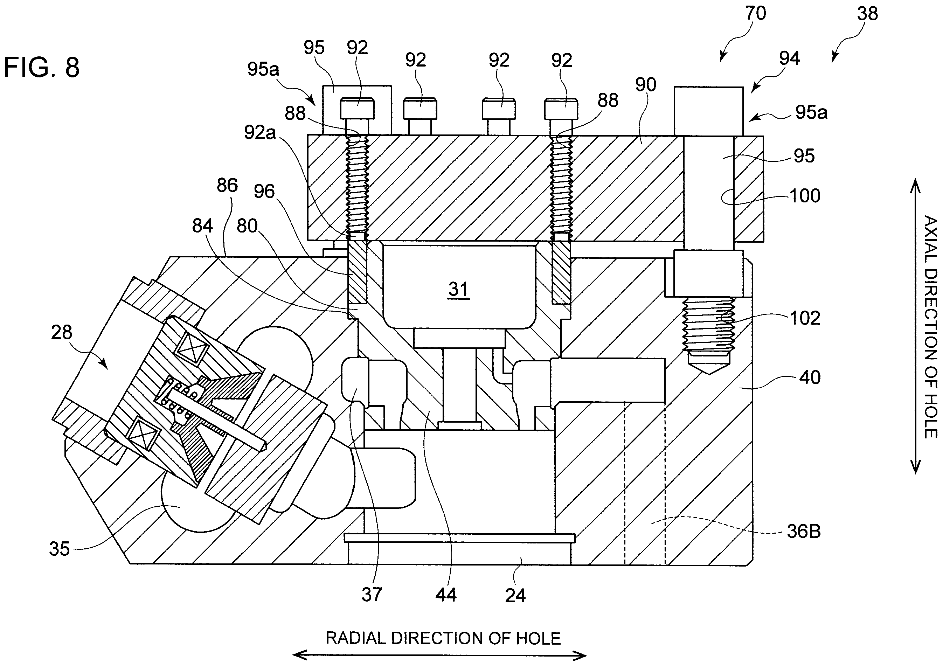

FIGs. 4 and 5 are each a schematic cross-sectional view of a configuration of a part of a valve block according to an embodiment. FIG. 6 is a perspective view of a fastening part of the valve block depicted in FIG. 5. FIG. 7 is a perspective view of a valve block according to an example (not covered by the invention as claimed). FIG. 8 is a schematic cross-sectional view of a configuration of a valve block depicted in FIG. 7.

In FIGs. 5 and 8, a low-pressure valve housing space 31 for housing the low-pressure valve 30 is depicted instead of the low-pressure valve 30. Moreover, the low-pressure valve 30 depicted in FIG. 4 has a configuration similar to that of the above described low-pressure valve 30.

In the valve block 38 depicted in FIGs. 4 to 8, the valve casing 44 includes a flange portion 80 disposed so as to protrude outward in a radial direction of a hole 43 of the valve-block body 40 (hereinafter, also referred to as simply "radial direction"). Furthermore, the valve-block body 40 includes a contact surface 84 to be in contact with a surface 82 which is the surface closer to the working chamber 24 of the both end surfaces 81, 82 of the flange portion 80.

The fastening part 70 fastens the valve-block body 40 and the valve casing 44 by applying an axial force along an axial direction of the hole 43 of the valve-block body 40 (hereinafter, also referred to as simply "axial direction"), to the contact surface 84 via the flange portion 80.

The contact surface 84 of the valve-block body 40 is disposed closer to the working chamber 24 in the axial direction than an outer surface 86 of the valve-block body 40 at an outer circumferential edge around the hole 43.

Accordingly, the length D3 in the axial direction of a section of the valve casing 44 ranging from the contact surface 84 of the valve-block body 40 to the working chamber 24 (i.e., the free end section of the cantilever structure supported at the position of the contact surface 84) in the axial direction is shorter than the distance D2 in the axial direction between the outer surface (one end surface) 86 of the valve-block body 40 and a surface 87 which is the surface closer to the working chamber 24 of the both end surface 86, 87 of the valve casing 44, and thereby it is possible to reduce fretting between the valve-block body 40 and the valve casing 44 with the length (D3) of the free end section of the cantilever structure being reduced.

In the valve block 38 depicted in FIG. 4, the flange portion 80 is disposed on the opposite side from the working chamber 24 across the low-pressure annular channel 37 in the axial direction.

In some embodiments, the flange portion 80 may be disposed on the same side of the low-pressure annular channel 37 as the working chamber 24 in the axial direction.

In some embodiments, a ratio (D1/D2) of the distance D1 in the axial direction between the outer surface 86 of the valve-block body 40 and the contact surface 84 to the distance D2 in the axial direction between the outer surface 86 of the valve-block body 40 and the surface 87 closer to the working chamber 24 of the both end surfaces 86, 87 of the valve casing 44 is at least 0.3.

In this case, the length (D3) of the free end section of the cantilever structure of the valve casing 44 is reduced, and thereby it is possible to reduce fretting between the valve-block body 40 and the valve casing 44 more reliably.

In the embodiment depicted in FIGs. 4 to 6, the fastening part 70 includes a nut member 72 having a male thread 73 to be mated with a female thread 47 formed on the hole 43 of the valve-block body 40.

With this configuration, the nut member 72 is screwed into the hole 43 of the valve-block body 40 to fasten the valve casing 44 to the valve-block body 40, and thus it is not necessary to screw the valve casing 44 into the valve-block body 40 during fastening, unlike the case where a male thread is formed on the outer peripheral surface of the valve casing 44 itself, and thereby it is possible to reduce sliding between the valve casing 44 and the valve-block body 40. Accordingly, it is possible to reduce a risk of damage to a member disposed between the valve casing 44 and the valve-block body 40 (e.g. a seal member such as an O-rings 97, 98, 99, or the like).

More specifically, if a valve casing is to be fastened to a valve-block body by mating a male thread formed on the outer peripheral surface of the valve casing itself with a female thread formed on a hole of the valve body as in the valve block disclosed in JP 2014-163377A, a seal member or the like disposed between the valve casing and the valve-block body may get damaged from sliding between the valve casing and the valve body. In the above described configuration, it is possible to reduce a risk of such damage.

In the embodiment depicted in FIGs. 5 and 6, the nut member 72 includes a plurality of first screw holes 74 arranged along the circumferential direction of the nut member 72 and formed through the nut member 72. The fastening part 70 further includes a plurality of first bolts 75 to be screwed into the respective first screw holes 74, and the plurality of first bolts 75 is configured to transmit a fastening force that acts between the valve-block body 40 and the nut member 72 to the flange portion 80 as an axial force along the axial direction.

In case an initial fastening force for fastening the valve casing 44 and the valve-block body 40 is insufficient, a gap may be formed between the end surface 82 of the flange portion 80 and the contact surface 84 when the pressure of the working chamber 24 becomes high during operation of the hydraulic machine (hydraulic motor 10).

In this regard, with the above configuration, the plurality of first bolts 75 having a smaller diameter than the nut member 72 is used, and thus it is possible to apply a relatively large axial force to the contact surface 84 with a relatively smaller fastening torque. Accordingly, by fastening the plurality of first bolts 75 with a relatively small fastening torque, it is possible to suppress loosening of the fastening part 70 for fastening the valve casing 44 and the valve-block body 40, even in a case where the pressure of the working chamber 24 becomes relatively high.

In the embodiment depicted in FIGs. 5 and 6, the valve block 38 further includes a first spacer 76 disposed between the flange portion 80 and the tips of the respective first bolts 75.

In some embodiments, the first spacer 76 is formed from a material different from that of the first bolts 75 and the flange portion 80. For instance, the first spacer 76 is formed from a material of a higher hardness than that of the first bolts 75 and the flange portion 80.

Accordingly, the first spacer 76 is made from a different material from the first bolts 75 and the flange portion 80 and provided between the tips of the first bolts 75 and the flange portion 80, and thereby it is possible to reduce fretting abrasion between the tips of the first bolts 75 and the flange portion 80 (valve casing 44).

In the example depicted in FIGs. 7 and 8, the fastening part 70 includes a nut plate 90 disposed so as to cover the outer surface 86 of the valve-block body 40, a plurality of second bolts 92 to be screwed into second screw holes 88 of the nut plate 90, and a reaction-force receiving portion 94.

The nut plate 90 includes the plurality of second screw holes 88, on each of which a female thread 89 is formed. The plurality of second bolts 92 are configured to be screwed into the respective second screw holes 88, and to generate a fastening force for the nut plate 90, which acts as an axial force along the axial direction. The reaction-force receiving portion 94 is configured to receive a reaction force of a fastening force which is generated by screwing the second bolts 92 into the second screw holes 88 and which acts on the nut plate 90.

With this configuration, the second bolts 92 are screwed into the second screw holes 88 formed on the nut plate 90 to fasten the valve casing 44 to the valve-block body 40, and thus it is not necessary to screw the valve casing 44 into the valve-block body 40 during fastening, unlike the case where a male thread is formed on the outer peripheral surface of the valve casing 44 itself, and thereby it is possible to reduce sliding between the valve casing 44 and the valve-block body 40. Accordingly, it is possible to reduce a risk of damage to a member (e.g. a seal member) disposed between the valve casing 44 and the valve-block body 40.

Furthermore, with the above configuration, the plurality of second bolts 92 have a relatively smaller diameter and the reaction-force receiving portion 94 receives a reaction force of a fastening force applied to the nut plate 90, and thus it is possible to apply a relatively large axial force reliably to the contact surface 84 with a relatively smaller fastening torque. Accordingly, it is possible to suppress loosening of the fastening part 70 for fastening the valve casing 44 and the valve-block body 40 even in a case where the pressure of the working chamber 24 becomes relatively high.

In the example depicted in FIGs. 7 and 8, the valve block 38 further includes a ring member 96 disposed between the flange portion 80 and tips 92a of the second bolts 92. The ring member 96 is configured to transmit to the flange portion 80 a fastening force generated by screwing the second bolts 92 into the second screw holes 88 to act on the nut plate 90.

Specifically, when the second bolts 92 are screwed into the second screw holes 88 of the nut plate 90, the ring member 96 is pressed against the flange portion 80 by the tips 92a of the second bolts 92, and thereby the valve casing 44 and the valve-block body 40 are fastened to each other. In this case, the nut plate 90 and the ring member 96 may not necessarily be in contact with each other.

In this case, with the ring member 96 disposed between the tips 92a of the second bolts 92 and the flange portion 80, it is possible to apply a fastening force generated by the second bolts 92 to the contact surface 84 via the flange portion 80 even more reliably. Accordingly, it is possible to fasten the valve casing 44 to the valve-block body 40 more reliably.

In some examples (not covered by the invention as claimed), the valve block 38 may further include a second spacer (not depicted) disposed between the ring member 96 and the tips of the respective second bolts 92. In this case, the second spacer may be formed from a material different from that of the second bolts 92 and the ring member 96. For instance, the second spacer is formed from a material of a higher hardness than that of the second bolts 92 and the ring member 96.

In some examples (not covered by the invention as claimed), the valve block 38 may further include a third spacer (not depicted) disposed between the ring member 96 and the flange portion 80. In this case, the third spacer may be formed from a material different from that of the ring member 96 and the flange portion 80. For instance, the third spacer is formed from a material of a higher hardness than that of the ring member 96 and the flange portion 80.

Accordingly, with the second spacer or the third spacer of a different material from the second bolts 92 and the ring member, or from the ring member 96 and the flange portion 80, provided between the tips of the second bolts 92 and the ring member 96, or between the ring member 96 and the flange portion 80, it is possible to reduce fretting abrasion between the tips of the second bolts 92 and the ring member 96, or between the ring member 96 and the flange portion 80 (valve casing 44).

In the example depicted in FIGs. 7 and 8, the reaction-force receiving portion 94 comprises head portions 95a of reaction-force receiving bolts 95 screwed into the outer surface 86 of the valve-block body 40.

The reaction-force receiving bolts 95 are bolts having a relatively long length, inserted through holes 100 formed on the nut plate 90 and screwed into bolt holes 102 formed on the valve-block body 40. The head portions 95a of the reaction-force receiving bolts 95 receive a reaction force of an axial force generated by fastening the second bolts, and thereby it is possible to suppress uplift of the nut plate 90.

In some examples (not covered by the invention as claimed), the reaction-force receiving bolts 95 have a diameter larger than that of the second bolts 92. By using the reaction-force receiving bolts 95 having a relatively large diameter, it is possible to receive a reaction force of a fastening force applied to the nut plate 90 more reliably.

In some embodiments, an initial fastening force of the fastening part 70 is set so that the surface 82 of the flange portion 80 does not move apart from the contact surface 84 of the valve-block body 40 due to pressure change of the working chamber 24 that occurs during operation of the fluid machine (hydraulic motor 10). For instance, the initial fastening force is set as described above, for the nut member 72 in the embodiment depicted in FIG. 4, for the nut member 72 and the first bolts 75 in the embodiment depicted in FIGs. 5 and 6, and for the second bolts 92 in the example depicted in FIGs. 7 and 8.

Accordingly, it is possible to reduce fretting between the valve-block body 40 and the valve casing 44 while maintaining sufficient durability against pressure change of the working chamber 24 in the valve block 38.

The initial fastening force of the fastening part 70 can be determined, for instance, on the basis of at least one of the maximum pressure of the working chamber 24 applied to the flange portion 80, or on a chart representing a correlation between a force applied to the fastening part 70 and expansion of the fastening part 70.

Embodiments of the present invention were described in detail above, but the present invention is not limited thereto, and various amendments and modifications may be implemented.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. A valve block (38), comprising:
a valve (30) configured to be capable of opening and closing in accordance with a periodic change of a pressure of a working chamber (24) of a fluid machine;
a valve casing (44) accommodating the valve (30);
a valve-block body (40) having a hole (43) for receiving the valve casing (44); and
a fastening part (70) provided as a separate member from the valve casing (44) and from the valve-block body (40) and configured to fasten the valve casing (44) received in the hole (43) to the valve-block body (40),
wherein the valve casing (44) includes a flange portion (80) disposed so as to protrude outward in a radial direction of the hole (43),
wherein the valve-block body (40) includes a contact surface (84) in contact with a surface (82) closer to the working chamber (24) of both end surfaces (81,82) of the flange portion (80),
wherein the fastening part (70) is configured to fasten the valve casing (44) to the valve-block body (40) by applying an axial force along an axial direction of the hole (43) to the contact surface (84) via the flange portion (80), wherein the contact surface (84) of the valve-block body (40) is disposed closer to the working chamber (24) in the axial direction than an outer surface (86) of the valve-block body (40) at an outer circumferential edge of the hole (43), and
wherein the fastening part (70) comprises a nut member (72) having a male thread (73) to be mated with a female thread (47) formed on the hole (43) of the valve-block body (40) .

2. The valve block (38) according to claim 1,
wherein a ratio of D1 to D2 is at least 0.3, where D1 is a distance between the contact surface (84) and the outer surface (86) of the valve-block body (40) in the axial direction and D2 is a distance between the outer surface (86) of the valve-block body (40) and a surface closer to the working chamber (24) of both end surfaces of the valve casing (44) in the axial direction.

3. The valve block (38) according to claim 1 or 2,
wherein the fastening part (70) further comprises a plurality of first bolts (75) to be screwed into respective first screw holes (74) disposed along a circumferential direction of the nut member (72) and formed through the nut member (72), and
wherein the plurality of first bolts (75) is configured to transmit a fastening force acting between the valve-block body (40) and the nut member (72) to the flange portion (80) as the axial force.

4. The valve block (38) according to claim 3, further comprising a first spacer (76) which is disposed between tips of the respective first bolts (75) and the flange portion (80), and which comprises a material different from that of the first bolts (75) and the flange portion (80).

5. The valve-block according to any one of claims 1 to 4,
wherein an initial fastening force of the fastening part (70) is set so that the surface (82) of the flange portion (80) does not separate from the contact surface (84) of the valve-block body (40) due to pressure change of the working chamber (24) during operation of the fluid machine.

6. The valve block according to any one of claims 1 to 5,
wherein the valve (30) comprises:
a rod (60) having a first end portion and a second end portion;
a valve-body unit (64) joined to the first end portion of the rod (60) and having at least a valve body (65) capable of being in contact with a valve seat (39) formed on the valve casing (44);
an armature (66) joined to the second end portion of the rod (60);
a biasing member configured to bias the armature (66) in a biasing direction; and
an electromagnet (69) configured to attract the armature (66) to drive the armature (66) in a direction opposite to the biasing direction when supplied with electric power, and
wherein the valve casing (44) comprises:
an inner channel (27) for permitting the working chamber (24) and an external piping to be in communication when the valve (30) is open;
a rod insertion hole (46) through which the second end portion of the rod (60) is capable of passing; and
an electromagnet housing space (48) for housing the electromagnet (69).

7. A fluid machine, comprising:
a cylinder (20);
a piston (22) configured to be capable of reciprocating inside the cylinder (20); and
the valve block (38) according to any one of claims 1 to 6,
wherein the working chamber (24) is defined by the cylinder (20) and the piston (22), and
wherein the valve (30) is configured to be capable of switching inflow of a fluid to the working chamber (24) or outflow of a fluid from the working chamber (24).

8. A renewable energy power generating apparatus, comprising:
a rotor (3) configured to receive renewable energy to rotate;
a hydraulic pump (8) configured to be driven by the rotor (3) to pressurize working oil;
a hydraulic motor (10) configured to be driven by the working oil pressurized by the hydraulic pump (8);
a high-pressure line (12) connecting an outlet of the hydraulic pump (8) and an inlet of the hydraulic motor (10);
a low-pressure line (14) connecting an outlet of the hydraulic motor (10) and an inlet of the hydraulic pump (8); and
a generator (16) configured to be driven by the hydraulic motor (10),
wherein at least one of the hydraulic pump (8) or the hydraulic motor (10) is the fluid machine according to claim 7, and
wherein the valve (30) is configured to be capable of switching a communication state between the working chamber (24) and the high-pressure line (12) or the low-pressure line (14) .

## Patentansprüche

1. Ein Ventilblock (38) mit:
einem Ventil (30), das konfiguriert ist, um sich gemäß einer periodischen Änderung eines Drucks einer Arbeitskammer (24) einer Fluidmaschine öffnen und schließen zu können,
einem Ventilgehäuse (44), welches das Ventil (30) aufnimmt,
einem Ventilblockkörper (40) mit einem Loch (43) zur Aufnahme des Ventilgehäuses (44), und
einem Befestigungsteil (70), das als ein separates Element von dem Ventilgehäuse (44) und von dem Ventilblockkörper (40) vorgesehen ist und das konfiguriert ist, um das Ventilgehäuse (44), das in dem Loch (43) aufgenommen ist, an dem Ventilblockkörper (40) zu befestigen,
wobei das Ventilgehäuse (44) einen Flanschabschnitt (80) aufweist, der so angeordnet ist, dass er in einer Radialrichtung des Lochs (43) nach außen vorsteht,
wobei der Ventilblockkörper (40) eine Kontaktoberfläche (84) in Kontakt mit einer Oberfläche (82) näher bei der Arbeitskammer (24) von beiden Endoberflächen (81,82) des Flanschabschnitts (80) aufweist,
wobei das Befestigungsteil (70) konfiguriert ist, um das Ventilgehäuse (44) an dem Ventilblockkörper (40) durch Anwenden einer axialen Kraft entlang einer Axialrichtung des Lochs (43) auf die Kontaktoberfläche (84) über den Flanschabschnitt (80) zu befestigen,
wobei die Kontaktoberfläche (84) des Ventilblockkörpers (40) näher bei der Arbeitskammer (24) in der Axialrichtung angeordnet ist als eine äußere Oberfläche (86) des Ventilblockkörpers (40) an einer äußeren Umfangsrand des Lochs (43), und
wobei das Befestigungsteil (70) ein Mutterelement (72) mit einem männlichen Gewinde (73), das mit einem weiblichen Gewinde (47), das an dem Loch (43) des Ventilblockkörpers (40) ausgebildet ist, zusammenzupassen ist.

2. Der Ventilblock (38) gemäß Anspruch 1,
wobei ein Verhältnis von D1 zu D2 zumindest 0.3 beträgt, wobei D1 eine Distanz zwischen der Kontaktoberfläche (84) und der äußeren Oberfläche (86) des Ventilblockkörpers (40) in der Axialrichtung ist und D2 eine Distanz zwischen der äußeren Oberfläche (86) des Ventilblockkörpers (40) und einer Oberfläche näher bei der Arbeitskammer (24) von beiden Endoberflächen des Ventilgehäuses (44) in der Axialrichtung ist.

3. Der Ventilblock (38) gemäß Anspruch 1 oder 2,
wobei das Befestigungsteil (70) ferner eine Vielzahl von ersten Bolzen (75) aufweist, die in jeweilige erste Schraubenlöcher (74) einzuschrauben sind, die entlang einer Umfangsrichtung des Mutterelements (72) angeordnet und durch das Mutterelement (72) hindurch ausgebildet sind, und
wobei die Vielzahl von ersten Bolzen (75) konfiguriert ist, um eine Befestigungskraft zu übertragen, die zwischen dem Ventilblockkörper (40) und dem Mutterelement (72) wirkt, auf den Flanschabschnitt (80) als die axiale Kraft zu übertragen.

4. Der Ventilblock (38) gemäß Anspruch 3, ferner mit einem ersten Abstandhalter (76), der zwischen Vorderenden der jeweiligen ersten Bolzen (75) und dem Flanschabschnitt (80) angeordnet ist, und der ein Material aufweist, das von dem der ersten Bolzen (75) und dem des Flanschabschnitts (80) unterschiedlich ist.

5. Der Ventilblock gemäß einem der Ansprüche 1 bis 4,
wobei eine anfängliche Befestigungskraft des Befestigungsteils (70) so gewählt ist, dass die Oberfläche (82) des Flanschabschnitts (80) sich nicht von der Kontaktoberfläche (84) des Ventilblockkörpers (40) aufgrund einer Druckveränderung der Arbeitskammer (24) während des Betriebs der Fluidmaschine separiert.

6. Der Ventilblock gemäß einem der Ansprüche 1 bis 5, wobei das Ventil (30) aufweist:
einen Stab (60) mit einem ersten Endabschnitt und einem zweiten Endabschnitt,
eine Ventilkörpereinheit (64), die mit dem ersten Endabschnitt des Stabs (60) verbunden ist und zumindest einen Ventilkörper (65) besitzt, der in Kontakt mit einem Ventilsitz (39), der an dem Ventilgehäuse (44) ausgebildet ist, in Kontakt sein kann,
eine Armatur (66), die mit dem zweiten Endabschnitt des Stabs (60) verbunden ist,
ein Vorbelastungselement, das konfiguriert ist, um die Armatur (66) in einer Vorbelastungsrichtung vorzubelasten, und
einen Elektromagnet (69), der konfiguriert ist, um die Armatur (66) zum Antreiben der Armatur (66) in einer Richtung entgegen der Vorbelastungskraft anzuziehen, wenn er mit elektrischer Energie versorgt wird, und
wobei das Ventilgehäuse (44) aufweist:
einen inneren Kanal (27), um die Arbeitskammer (24) und eine externe Rohrleitung in Verbindung sein zu lassen, wenn das Ventil (30) geöffnet ist,
ein Stabeinsetzloch (46), durch das der zweite Endabschnitt des Stabs (60) passieren kann, und
ein Elektromagnet-Gehäuseraum (48) zum Aufnehmen des Elektromagneten (69).

7. Eine Fluidmaschine, mit:
einem Zylinder (20),
einem Kolben (22), der konfiguriert ist, um im Inneren des Zylinders (20) hin-und-her zu gehen, und
dem Ventilblock (38) gemäß einem der Ansprüche 1 bis 6,
wobei die Arbeitskammer (24) durch den Zylinder (20) und den Kolben (22) definiert ist, und
wobei das Ventil (30) konfiguriert ist, um ein Einströmen eines Fluids in die Arbeitskammer (24) oder ein Ausströmen eines Fluids aus der Arbeitskammer (24) umschalten zu können.

8. Eine Stromerzeugungsvorrichtung auf Basis von erneuerbarer Energie mit:
einem Rotor (3), der konfiguriert ist, um erneuerbare Energie zum Rotieren zu empfangen,
einer Hydraulikpumpe (8), die konfiguriert ist, um durch den Rotor (3) zum Druckbeaufschlagen von Arbeitsöl angetrieben zu werden,
einem Hydraulikmotor (10), der konfiguriert ist, um durch das von der Hydraulikpumpe (8) mit Druck beaufschlagte Arbeitsöl angetrieben zu werden,
einer Hochdruckleitung (12), die einen Auslass der Hydraulikpumpe (8) und einen Einlass des Hydraulikmotors (10) verbindet,
einer Niederdruckleitung (14), die einen Auslass des Hydraulikmotors (10) und einen Einlass der Hydraulikpumpe (8) verbindet, und
einem Generator (16), der konfiguriert ist, um durch den Hydraulikmotor (10) angetrieben zu werden,
wobei zumindest einer von der Hydraulikpumpe (8) oder dem Hydraulikmotor (10) die Fluidmaschine gemäß Anspruch 7 ist, und
wobei das Ventil (30) konfiguriert ist, um einen Verbindungszustand zwischen der Arbeitskammer (24) und der Hochdruckleitung (12) oder der Niederdruckleitung (14) umschalten zu können.

## Revendications

1. Bloc (38) de vanne, comprenant :
une vanne (30), configurée pour pouvoir s'ouvrir et se fermer en fonction d'un changement périodique d'une pression d'une chambre (24) de travail d'une machine à fluide ;
une enveloppe (44) de vanne, dans laquelle la vanne (30) est logée ;
un corps (40) de bloc de vanne, ayant un trou (43) pour recevoir l'enveloppe (44) de vanne et
une partie (70) de fixation, prévue sous la forme d'un élément distinct de l'enveloppe (44) de vanne et du corps (40) de bloc de vanne et configurée pour fixer l'enveloppe (44) de vanne, reçue dans le trou (43), au corps (40) de bloc de vanne,
dans lequel l'enveloppe (44) de vanne comprend une partie (80) de rebord, disposée de manière à faire saillie vers l'extérieur dans une direction radiale du trou (43),
dans lequel le corps (40) de bloc de vanne comprend une surface (84) de contact en contact avec une surface (82) la plus proche de la chambre (24) de travail des deux surfaces (81, 82) d'extrémité de la partie (80) de rebord,
dans lequel la partie (70) de fixation est configurée pour fixer l'enveloppe (44) de vanne au corps (40) de bloc de vanne, en appliquant une force axiale suivant une direction axiale du trou (43) à la surface (84) de contact par l'intermédiaire de la partie (80) de rebord,
dans lequel la surface (84) de contact du corps (40) du bloc de vanne est disposée plus près de la chambre (24) de travail dans la direction axiale qu'une surface (86) extérieure du corps (40) du bloc de vanne à un bord circonférentiel extérieur du trou (43) et
dans lequel la partie (70) de fixation comprend un élément (72) d'écrou, ayant un filetage (73) mâle à verser avec un filetage (47) femelle formé sur le trou (43) du corps (40) du bloc de vanne.

2. Bloc (38) de vanne suivant la revendication 1,
dans lequel un rapport de D1 à D2 est d'au moins 0,3, D1 étant une distance entre la surface (84) de contact et la surface (86) extérieure du corps (40) du bloc de vanne dans la direction axiale et D2 étant une distance entre la surface (86) extérieure du corps (40) du bloc de vanne et une surface la plus proche de la chambre (24) de travail des deux surfaces d'extrémité de l'enveloppe (44) de vanne dans la direction axiale.

3. Bloc (38) de vanne suivant la revendication 1 ou 2,
dans lequel la partie (70) de fixation comprend, en outre, une pluralité de premiers boulons (75) à boulonner dans des premiers trous (74) taraudés respectifs, disposés suivant une direction circonférentielle de l'élément (72) d'écrou et formés à travers l'élément (72) d'écrou et
dans lequel la pluralité de premiers boulons (75) est configurée pour transmettre une force de fixation s'appliquant entre le corps (40) du bloc de vanne et l'élément (72) d'écrou à la partie (80) de rebord en tant que force axiale.

4. Bloc (38) de vanne suivant la revendication 3, comprenant, en outre, une première entretoise (76), qui est disposée entre des bouts des premiers boulons (75) respectifs et la partie (80) de rebord, et qui comprend un matériau différent de celui des premiers boulons (75) et de la partie (80) de rebord.

5. Bloc (38) de vanne suivant l'une quelconque des revendications 1 à 4,
dans lequel une force de fixation initiale de la partie (7) de fixation est réglée de manière à ce que la surface (82) de la partie (80) de rebord ne se sépare pas de la surface (84) de contact du corps (40) du bloc de vanne, en raison d'un changement de pression dans la chambre (24) de travail pendant le fonctionnement de la machine à fluide.

6. Bloc (38) de vanne suivant l'une quelconque des revendications 1 à 5,
dans lequel la vanne (30) comprend :
une tige (6) ayant une première partie d'extrémité et une seconde partie d'extrémité ;
une unité (64) de corps de vanne jointe à la première partie d'extrémité de la tige (60) et ayant au moins un obturateur (65) apte à être en contact avec un siège (39) de vanne, formé sur l'enveloppe (44) de vanne ;
une armature (66) jointe à la seconde partie d'extrémité de la tige (60) ;
un élément de poussée, configuré pour pousser l'armature (66) dans un sens de poussée et
un électroaimant (69), configuré pour attirer l'armature (66), afin d'entraîner l'armature (66) dans un sens contraire au sens de poussée, lorsqu'il est alimenté en électricité et
dans laquelle l'enveloppe (44) de vanne comprend :
un canal (27) intérieur pour permettre de mettre la chambre (24) de travail en communication avec une canalisation extérieure, lorsque la vanne (30) est ouverte ;
un trou (46) d'insertion de la tige, par lequel la seconde partie d'extrémité de la tige (60) peut passer et
un espace (48) de logement d'un électroaimant pour loger l'électroaimant (69).

7. Machine à fluide, comprenant :
un cylindre (20) ;
un piston (22), configuré pour pouvoir aller et venir à l'intérieur du cylindre (20) et
le bloc (38) de vanne suivant l'une quelconque des revendications 1 à 6,
dans laquelle la chambre (24) de travail est définie par le cylindre (20) et par le piston (22) et
dans laquelle la vanne (30) est configurée pour pouvoir commuter entre une arrivée d'un fluide à la chambre (24) de travail et une sortie d'un fluide de la chambre (24) de travail.

8. Installation de production d'énergie renouvelable, comprenant :
une roue (3), configurée pour recevoir de l'énergie renouvelable, afin de tourner ;
une pompe (8) hydraulique, configurée pour être entraînée par la roue (3) pour mettre de l'huile de travail sous pression ;
un moteur (10) hydraulique, configuré pour être entraîné par l'huile de travail mise sous pression par la pompe (8) hydraulique ;
une ligne (12) de haute pression, mettant une sortie de la pompe (8) hydraulique en communication avec une entrée du moteur (10) hydraulique ;
une ligne (14) de basse pression, mettant une sortie du moteur (10) hydraulique en communication avec une entrée de la pompe (8) hydraulique et
une génératrice (16), configurée pour être entraînée par le moteur (10) hydraulique,
dans laquelle au moins l'un de la pompe (8) hydraulique ou du moteur (10) hydraulique est la machine à fluide suivant la revendication 7 et
dans laquelle la vanne (30) est configurée pour pouvoir commuter un état de communication entre la chambre (24) de travail et la ligne (12) sous haute pression ou la ligne (14) sous basse pression.
